# EUROPEAN PATENT APPLICATION

(11) **EP 4 614 494 A1**
(43) Date of publication of application: **10.09.2025**
(21) Application number: 25162747.7
(22) Date of filing: 10.03.2025
(51) Int. Cl.: G10K 11/172, F02C 7/045

(54) **AIRCRAFT ACOUSTIC PANEL WITH INTEGRATED FIRE-RESISTANT MATERIAL**

(30) Priority: 08.03.2024 US 202418600204
(71) Applicant: PRATT & WHITNEY CANADA CORP., Longueuil, Québec J4G 1A1 (CA)
(72) Inventor: BARNETT, Barry, (01BE5) Longueuil, J4G 1A1 (CA); CASTONGUAY, Pierre, (01BE5) Longueuil, J4G 1A1 (CA); HAMP, Jason, (01BE5) Longueuil, J4G 1A1 (CA)
(74) Representative: Dehns

(57) **Abstract**

An apparatus is provided for an aircraft. This apparatus includes an acoustic panel (20), and the acoustic panel (20) includes a face skin (34), a back skin (36) and a cellular core (38) disposed between and connected to the face skin (34) and the back skin (36). The back skin (36) laterally overlaps the face skin (34) and includes an aerogel layer (66). The cellular core (38) includes a plurality of cavities (80) that extend through the cellular core (38) from the face skin (34) to the back skin (36). Each of the cavities (80) is fluidly coupled with one or more perforations (54) in the face skin (34).

## Description

### TECHNICAL FIELD

This disclosure relates generally to an aircraft and, more particularly, to a component of the aircraft with fire-resistant material.

### BACKGROUND INFORMATION

An aircraft propulsion system may include one or more acoustic panels for attenuating sound generated by its gas turbine engine. Various types and configurations of acoustic panels are known in the art. Various fire blankets are also known in the art. While these known acoustic panels and fire blankets may be suitable for their intended purposes, there is still room in the art for improvement.

### SUMMARY

According to an aspect of the present invention, an apparatus is provided for an aircraft. This apparatus includes an acoustic panel, and the acoustic panel includes a face skin, a back skin and a cellular core disposed between and connected to the face skin and the back skin. The back skin laterally overlaps the face skin and includes an aerogel layer. The cellular core includes a plurality of cavities that extend through the cellular core from the face skin to the back skin. Each of the cavities is fluidly coupled with one or more perforations in the face skin.

According to another aspect of the present invention, another apparatus is provided for an aircraft. This apparatus includes a first skin, a second skin and a metal core. The first skin is configured from or otherwise includes a first fiber-reinforced composite. The second skin laterally overlaps the first skin. The second skin includes a second fiber-reinforced composite and a fire-resistant material bonded to and laterally overlapping the second fiber-reinforced composite. The metal core is disposed between and bonded to the first skin and the second skin. The metal core includes a plurality of cavities that extend through the metal core from the first skin to the second skin.

In an embodiment of the above, each of the cavities may be fluidly coupled with one or more apertures extending through the first skin.

In an embodiment according to any of the previous embodiments, the fire-resistant material may be configured as or otherwise include an aerogel material.

According to still another aspect of the present invention, another apparatus is provided for an aircraft. This apparatus includes a first skin, a second skin and a cellular core. The second skin laterally overlaps the first skin and includes an aerogel layer. The cellular core is disposed between and bonded to the first skin and the second skin. The cellular core includes a plurality of cavities that extend through the cellular core from the first skin to the second skin. A thickness of the second skin changes as the aerogel layer extends laterally along the plurality of cavities.

In an embodiment of the above, the apparatus may also include an acoustic panel. The acoustic panel may include the first skin, the second skin and the cellular core.

In an embodiment according to any of the previous embodiments, the apparatus may also include a duct including the first skin, the second skin and the metal core. The first skin may form a peripheral boundary of a flowpath extending through the duct.

In an embodiment according to any of the previous embodiments, the aerogel layer may laterally overlap each of the cavities.

In an embodiment according to any of the previous embodiments, the back skin may also include a fiber-reinforced layer bonded to and laterally overlapping the aerogel layer.

In an embodiment according to any of the previous embodiments, the fiber-reinforced layer may completely laterally overlap the aerogel layer. The aerogel layer may partially laterally overlap the fiber-reinforced layer.

In an embodiment according to any of the previous embodiments, the fiber-reinforced layer may be disposed between the cellular core and the aerogel layer.

In an embodiment according to any of the previous embodiments, the fiber-reinforced layer may be a first fiber-reinforced layer. The back skin may also include a second fiber-reinforced layer bonded to and laterally overlapping the aerogel layer. The aerogel layer may be disposed between the first fiber-reinforced layer and the second fiber-reinforced layer.

In an embodiment according to any of the previous embodiments, the aerogel layer may be disposed between the fiber-reinforced layer and the cellular core.

In an embodiment according to any of the previous embodiments, the fiber-reinforced layer may include fiber reinforcement embedded within a polymer matrix.

In an embodiment according to any of the previous embodiments, the fiber reinforcement may be configured as or otherwise include fiberglass.

In an embodiment according to any of the previous embodiments, the fiber reinforcement may be configured as or otherwise include carbon fiber.

In an embodiment according to any of the previous embodiments, a thickness of the back skin may decrease as the back skin extends away from an edge of the aerogel layer into an intermediate region of the aerogel layer.

In an embodiment according to any of the previous embodiments, the face skin may include fiber reinforcement embedded within a polymer matrix.

In an embodiment according to any of the previous embodiments, the cellular core may be configured as or otherwise include metal.

In an embodiment according to any of the previous embodiments, the cellular core may be configured as or otherwise include a honeycomb core.

In an embodiment according to any of the previous embodiments, the acoustic panel may extend axially along and circumferentially about an axis. The back skin may be disposed radially outboard of the face skin.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial side sectional illustration of an acoustic panel arranged with aircraft components.
FIG. 2 is a partial cross-sectional illustration of the acoustic panel arranged with the aircraft components.
FIG. 3 is a partial sectional illustration of a perforated face skin.
FIG. 4 is a partial sectional illustration of a non-perforated back skin.
FIG. 5 is a partial perspective cutaway illustration of the acoustic panel.
FIGS. 6-9 are partial sectional illustrations of the acoustic panel with various fire-resistant layer arrangements.
FIG. 10 is a schematic side sectional illustration of an aircraft propulsion system configured with one or more of the acoustic panels.

### DETAILED DESCRIPTION

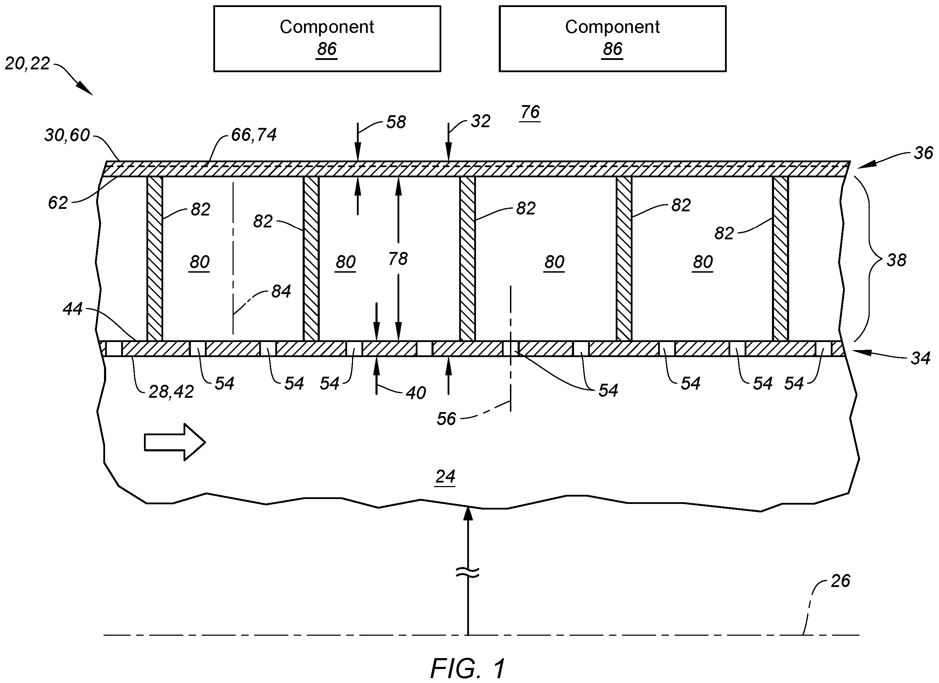

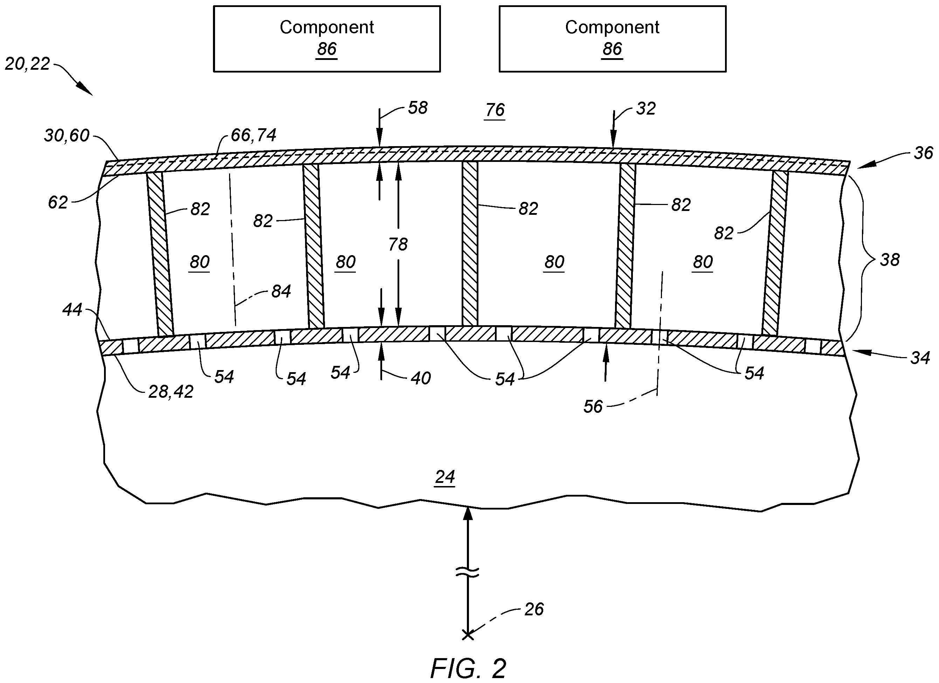

FIGS. 1 and 2 illustrate a structural, acoustic panel 20 for an aircraft. This acoustic panel 20 may be configured to attenuate sound (e.g., noise) generated by a propulsion system of the aircraft. The aircraft propulsion system may be a turbofan propulsion system, a turbojet propulsion system, a turboprop propulsion system or any other ducted-rotor and/or open-rotor aircraft propulsion system. The acoustic panel 20 may be part of a housing (e.g., a nacelle) for an engine (e.g., a gas turbine engine, a rotary engine, a reciprocating piston engine, etc.) and/or an electric motor of the aircraft propulsion system. The acoustic panel 20, for example, may be configured as or otherwise included as part of an inner barrel, an outer barrel, a translating sleeve, a blocker door, a bifurcation, etc. Alternatively, the acoustic panel 20 may be part of another component of the aircraft such as, but not limited to, an engine pylon, an aircraft wing or an aircraft fuselage. Furthermore, the acoustic panel 20 may also or alternatively be configured to attenuate aircraft related sound other than the sound generated by the aircraft propulsion system. Moreover, while the acoustic panel 20 is describe with reference to the aircraft propulsion system, the acoustic panel 20 may alternatively be arranged with an auxiliary power unit (APU) for the aircraft, or any other device which generates noise to be attenuated. However, for ease of description, the acoustic panel 20 of FIGS. 1 and 2 is described below as attenuating propulsion system sound and with respect to a component 22 (e.g., barrel) of the engine housing along a flowpath 24 (e.g., a bypass flowpath) within the aircraft propulsion system.

Referring to FIG. 1, the acoustic panel 20 extends axially along an axis 26. Briefly, this axis 26 may be a centerline axis of the aircraft propulsion system, a centerline axis of the engine housing and/or a centerline axis of the component 22 (e.g., the barrel) which is formed by or otherwise includes the acoustic panel 20. The acoustic panel 20 extends radially from a radial inner side 28 of the acoustic panel 20 to a radial outer side 30 of the acoustic panel 20. Referring to FIG. 2, the acoustic panel 20 extends circumferentially about (e.g., partially or completely around) the axis 26. The component 22 and/or its acoustic panel 20 may thereby have a curved (e.g., arcuate, cylindrical, conical, frustoconical) geometry.

With the arrangement of FIGS. 1 and 2, a vertical thickness 32 of the acoustic panel 20 extends in a radial direction relative to the axis 26, and a lateral plane of the acoustic panel 20 extends axially along and circumferentially about the axis 26. The present disclosure, however, is not limited to such an exemplary curved geometry nor such an orientation relative to the axis 26. For example, where the acoustic panel 20 is configured as or part of a sidewall of the bifurcation, the vertical thickness 32 may extend tangentially to a circular reference line about the axis 26, and the lateral plane may extend axially and/or radially relative to the axis 26. However, for ease of description, the acoustic panel 20 is described below with reference to the orientation of FIGS. 1 and 2 where a vertical direction extends radially relative to the axis 26, a first lateral direction extends axially along the axis 26, and a second lateral direction extends circumferentially about the axis 26.

The acoustic panel 20 of FIGS. 1 and 2 includes a perforated face skin 34, a solid (e.g., non-perforated) back skin 36 and a cellular core 38. For ease of description, the face skin 34 is described below as an inner skin of the acoustic panel 20 and the back skin 36 is described below as an outer skin of the acoustic panel 20. With such an arrangement, the acoustic panel 20 and its face skin 34 may form an outer peripheral boundary of at least a portion of the flowpath 24 within the aircraft propulsion system. It is contemplated, however, the face skin 34 may alternatively be the acoustic panel outer skin and the back skin 36 may alternatively be the acoustic panel inner skin with otherwise the same acoustic panel configuration of FIGS. 1 and 2. With such an arrangement, the acoustic panel 20 and its face skin 34 may form an inner peripheral boundary of at least a portion of the flowpath 24 within the aircraft propulsion system. The present disclosure, of course, is not limited to the foregoing exemplary arrangements. The acoustic panel 20, for example, may form a circumferential side boundary of the flowpath 24 and/or may otherwise be located with the aircraft propulsion system and/or the aircraft.

The face skin 34 of FIGS. 1 and 2 extends axially along and circumferentially about the axis 26. The face skin 34 has a radial thickness 40. This face skin thickness 40 extends radially between opposing exterior and interior sides 42 and 44 of the face skin 34, where the face skin exterior side 42 is also the inner side 28 of the acoustic panel 20 of FIGS. 1 and 2. The face skin thickness 40 may remain uniform (e.g., constant, the same) as the face skin 34 extends axially along and/or circumferentially about the axis 26. Alternatively, the face skin thickness 40 may be varied as the face skin 34 extends axially along and/or circumferentially about the axis 26, for example, to structurally reinforce one or more areas of the acoustic panel 20, facilitate accommodations of an asymmetric material construction, etc.

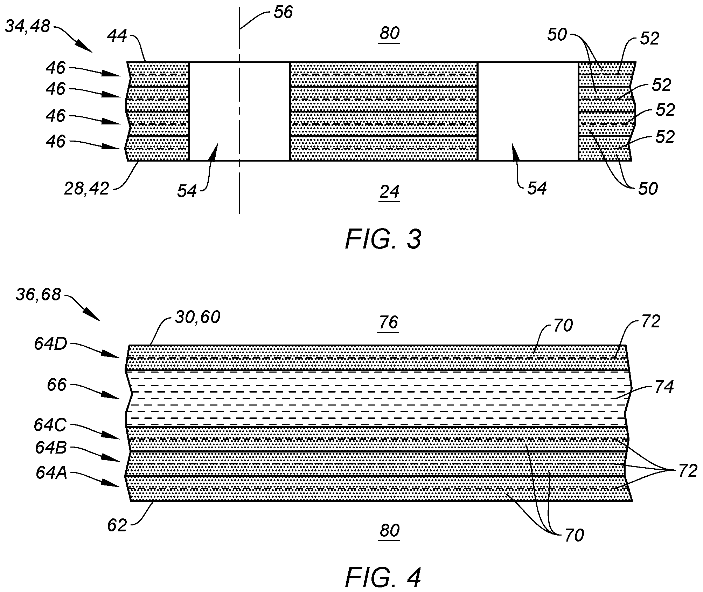

Referring to FIG. 3, the face skin 34 may be formed as composite skin. The face skin 34 of FIG. 3, for example, includes one or more layers 46 of face skin material arranged in a stack 48 and bonded together to form a single monolithic member of the acoustic panel 20 (see FIGS. 1 and 2). The face skin material may be a fiber-reinforced composite material. Each layer 46 of the face skin material, for example, may include a polymer matrix 50 and fiber reinforcement 52 embedded within the polymer matrix 50. The polymer matrix 50 may be a thermoset material or a thermoplastic material. The polymer matrix 50, for example, may be an epoxy, bismaleimides (BMI) resin, polyether ether ketone (PEEK) resin, or the like. The fiber reinforcement 52 may include fiberglass fibers, carbon fiber fibers, aramid (e.g., Kevlar^{®}) fibers and/or the like. The fiber reinforcement 52 may be arranged as a (e.g., woven or unwoven) sheet of fibers and/or chopped fibers. The present disclosure, however, is not limited to such exemplary face skin materials. For example, in other embodiments, the face skin 34 may be formed from metal; e.g., sheet metal.

The face skin 34 includes a plurality of perforations 54; e.g., apertures such as through-holes. The face skin perforations 54 are distributed axially and/or circumferentially along the face skin 34 and may (or may not) be equispaced from one another along the face skin 34. Each of the face skin perforations 54 extends longitudinally along a centerline 56 of the respective face skin perforations 54 through the face skin 34 and its layers 46 from the face skin exterior side 42 to the face skin interior side 44. The perforation centerline 56 of FIG. 3 is perpendicular to the face skin sides 42, 44 at (e.g., on, adjacent or proximate) a location where the respective face skin perforation 54 pierces the face skin sides 42, 44. It is contemplated, however, the perforation centerline 56 may alternatively be (e.g., slightly) acutely angled relative to the face skin sides 42, 44.

The back skin 36 of FIGS. 1 and 2 extends axially along and circumferentially about the axis 26. The back skin 36 has a radial thickness 58. This back skin thickness 58 extends radially between opposing exterior and interior sides 60 and 62 of the back skin 36, where the back skin exterior side 60 is also the outer side 30 of the acoustic panel 20 of FIGS. 1 and 2. The back skin thickness 58 may remain uniform as the back skin 36 extends axially along and/or circumferentially about the axis 26. Alternatively, the back skin thickness 58 may be varied as the back skin 36 extends axially along and/or circumferentially about the axis 26, for example, to structurally reinforce one or more areas of the acoustic panel 20, facilitate accommodations of an asymmetric material construction, etc. Referring again to FIGS. 1 and 2, the back skin thickness 58 may be equal to or different (e.g., greater) than the face skin thickness 40.

Referring to FIG. 4, the back skin 36 may be formed as a composite skin. The back skin 36 of FIG. 4, for example, includes one or more structural layers 64A-D (generally referred to as "64") of structural back skin material and at least one fire-resistant layer 66 of fire-resistant back skin material arranged in a stack 68 and bonded together to form a single monolithic member of the acoustic panel 20 (see FIGS. 1 and 2). The structural back skin material may be a fiber-reinforced composite material. Each structural layer 64 of the structural back skin material, for example, may include a polymer matrix 70 and fiber reinforcement 72 embedded within the polymer matrix 70. The polymer matrix 70 may be a thermoset material or a thermoplastic material. The polymer matrix 70, for example, may be an epoxy, bismaleimides (BMI) resin, polyether ether ketone (PEEK) resin, or the like. The fiber reinforcement 72 may include fiberglass fibers, carbon fiber fibers, aramid (e.g., Kevlar^{®}) fibers and/or the like. The fiber reinforcement 72 may be arranged as a (e.g., woven or unwoven) sheet of fibers and/or chopped fibers. The present disclosure, however, is not limited to such exemplary first back skin materials. The fire-resistant back skin material may be or otherwise include an aerogel material 74 such as, but not limited to, Pyrogel XTE material produced by Aspen Aerogels of Northborough, Massachusetts, United States. The present disclosure, however, is not limited to such exemplary back skin materials.

The fire-resistant layer 66 of FIG. 4 is arranged at an intermediate location within the back skin stack 68. The interior side structural layer 64A, for example, may form the back skin interior side 62. The exterior side structural layer 64D may form the back skin exterior side 60. The fire-resistant layer 66 of FIG. 4 is disposed (e.g., sandwiched) radially between the interior side structural layer 64A and the exterior side structural layer 64D. The interior side structural layer 64A may be one of multiple of the structural layers 64A-C radially between the fire-resistant layer 66 and the back skin interior side 62, whereas the exterior side structural layer 64D may (or may not) be the only one of the structural layers radially between the fire-resistant layer 66 and the back skin exterior side 60. Here, the exterior side structural layer 64D may form a protective covering over the fire-resistant layer 66 to protect the fire-resistant back skin material (e.g., the aerogel material 74) from an environment 76 external to the acoustic panel 20 (see FIGS. 1 and 2) and radially adjacent (or near) the back skin exterior side 60. Note, while the structural back skin material may be selected for its structural properties and the fire-resistant back skin material may be selected for its fire resistant properties, the fire-resistant layer 66 may also add to a structural integrity of the back skin 36. For example, similar to the structural layers 64, the fire-resistant layer 66 is bonded to its radially adjacent structural layers 64C and 64D. This bonding may be through the polymer matrix 70 of the adjacent structural layers 64C and 64D and/or additional polymer matrix material may be added between the fire-resistant layer 66 and its radially adjacent structural layers 64C and 64D. Also, while the fire-resistant back skin material (e.g., the aerogel material 74) may not be completely impregnated with the polymer matrix 70, it is contemplated the polymer matrix 70 may migrate partially into open pores of the fire-resistant back skin material. The present disclosure, however, is not limited to the foregoing exemplary layered back skin construction. For example, in other embodiments, the exterior side structural layer 64D may be omitted where the fire-resistant layer 66 is coated with a protective coating, etc. In still other embodiments, the layer 64D may be a non-structural layer.

Referring to FIGS. 1 and 2, the cellular core 38 is arranged and extends radially between the face skin 34 and the back skin 36. One side of the cellular core 38, for example, may be abutted radially against the face skin interior side 44. Another side of the cellular core 38 may be abutted radially against the back skin interior side 62. The cellular core 38 may also be connected to the face skin 34 and/or the back skin 36. The cellular core 38, for example, may be fused, adhered and/or otherwise bonded to the face skin 34 and/or the back skin 36.

The cellular core 38 of FIGS. 1 and 2 extends axially along and circumferentially about axis 26. The cellular core 38 has a radial thickness 78. This core thickness 78 extends radially between and to the face skin 34 at its face skin interior side 44 and the back skin 36 at its back skin interior side 62. The core thickness 78 may remain uniform as the cellular core 38 extends axially along and/or circumferentially about the axis 26. Alternatively, the core thickness 78 may change; e.g., increase or decrease. The core thickness 78, for example, may taper at or near one or more sides of the cellular core 38. The core thickness 78 may be substantially larger than the face skin thickness 40 and/or the back skin thickness 58. The core thickness 78, for example, may be at least ten to forty times (10-40x), or more, larger than the face skin thickness 40 and/or the back skin thickness 58. The cellular core 38 of the present disclosure, however, is not limited to such an exemplary dimensional relationship and may vary based on sound attenuation requirements, space requirements, etc.

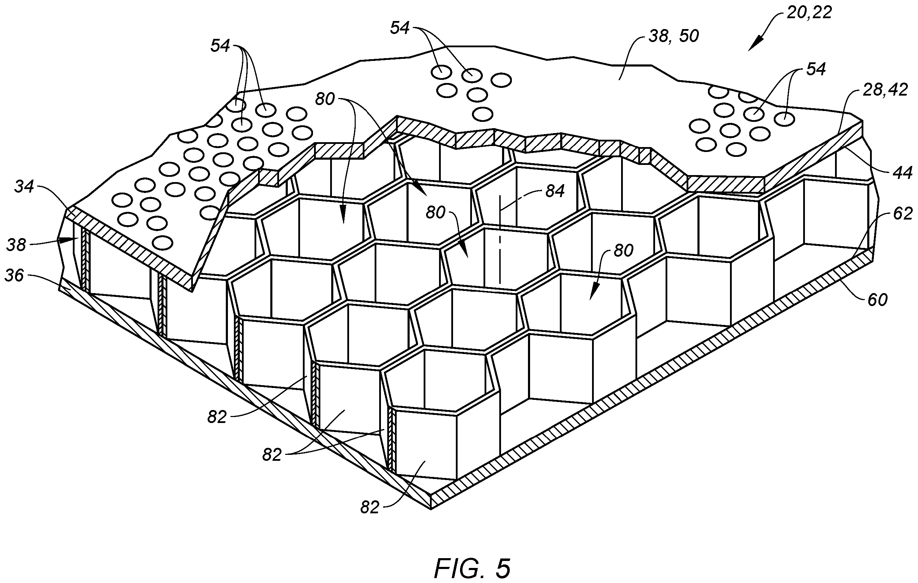

The cellular core 38 of FIGS. 1 and 2 is configured with one or more internal core cavities 80 (e.g., open internal chambers, acoustic resonance chambers, etc.) radially between the face skin 34 and the back skin 36. Referring to FIG. 5, the cellular core 38 may be configured as a honeycomb core. The cellular core 38 of FIG. 5, for example, includes a plurality of corrugated sidewalls 82. These corrugated sidewalls 82 are arranged in a side-by-side array and are connected to one another such that each neighboring (e.g., adjacent) pair of the corrugated sidewalls 82 forms an array of the core cavities 80 laterally (e.g., circumferentially and/or axially) therebetween. The cellular core 38 and its corrugated sidewalls 82 may be constructed from or otherwise include a core material such as metal; e.g., sheet metal. The present disclosure, however, is not limited to such an exemplary cellular core construction nor material. For example, in other embodiments, the cellular core 38 and its corrugated sidewalls 82 may be constructed from or otherwise include a composite material similar to that of the face skin 34 and/or the back skin 36.

Each core cavity 80 of FIGS. 1 and 2 extends radially within / through the cellular core 38 along a respective centerline 84 of the respective core cavity 80 between and to the face skin 34 at its face skin interior side 44 and the back skin 36 at its back skin interior side 62. One or more or all of the core cavities 80 may thereby each overlap and be fluidly coupled with a respective set of one or more of the face skin perforations 54. Referring to FIG. 5, each of the core cavities 80 has a cross-sectional geometry (e.g., shape, size, etc.) when viewed in a reference plane; e.g., a plane perpendicular to the cavity centerline 84 of the respective core cavity 80. This cavity cross-sectional geometry may have a polygonal shape; e.g., a hexagonal shape, a rectangular shape, a triangular shape, etc. The present disclosure, however, is not limited to foregoing exemplary cellular core configuration. For example, one or more or all of the core cavities 80 may alternatively each have a circular, elliptical or other non-polygonal cross-sectional geometry. Furthermore, various other types of honeycomb cores and, more generally, various other types of cellular cores for an acoustic panel are known in the art, and the present disclosure is not limited to any particular ones thereof.

The acoustic panel 20 of FIGS. 1 and 2 is configured as a single-degree of freedom (SDOF) acoustic panel. Each of the core cavities 80 of FIGS. 1 and 2, for example, extends radially uninterrupted from the face skin 34 to the back skin 36. With such an arrangement, the acoustic panel 20 may be tuned to attenuate, for example, a select frequency of sound, which tuning may be based on a radial height of each core cavity 80 / the core thickness 78. The present disclosure, however, is not limited to single-degree of freedom acoustic panel applications. At least (or only) one perforated septum, for example, may be arranged in each of the core cavities 80 (or a subset of the core cavities 80) to configure the acoustic panel 20 as a multi-degree of freedom (e.g., a double-degree of freedom) acoustic panel. Various types and configurations of acoustic panel septums are known in the art, and the present disclosure is not limited to any particular ones thereof.

During operation of the acoustic panel 20 of FIGS. 1 and 2, sound waves may enter a respective core cavity 80 through the respective face skin perforation(s) 54. These sound waves may travel through the core cavity 80 and reflect against the back skin 36. The reflected sound waves may travel back through the core cavity 80 and exit the acoustic panel 20 through the respective face skin perforation(s) 54, where those reflected sound waves may be out of phase from and destructively interfere with incoming soundwaves. Of course, the sound waves may also or alternatively reflect against one or more other elements of the acoustic panel 20 which may further influence sound attenuation.

Various components 86 of the aircraft propulsion system (schematically shown in FIGS. 1 and 2) may be arranged in the environment 76 adjacent (or near) the panel outer side 30. Examples of these propulsion system components 86 include, but are not limited to, an accessory gearbox, a working fluid pump (e.g., a fuel pump, a lubricant pump, a coolant pump, a hydraulic pump, etc.), a working fluid line (e.g., a fuel line, a lubricant line, a coolant line, a hydraulic line, etc.), an electrical device (e.g., a generator, an engine controller, etc.), and the like. In an unlikely event of a fire located at and/or a malfunction of one of the propulsion system components 86, the acoustic panel 20 and its panel outer side 30 may be subject to relatively high temperatures and/or flames. Under such conditions, the fire-resistant layer 66 and its fire-resistant back skin material (e.g., the aerogel material 74) may protect a majority of the back skin 36 as well as the face skin 34 and the cellular core 38 (e.g., when constructed from the composite material) from the high temperatures which may otherwise degrade those acoustic panel elements; e.g., decompose the polymer matrix within the acoustic panel elements. In addition, by integrating the fire-resistant back skin material into the back skin 36, the acoustic panel 20 may be configured in the aircraft propulsion system without other discrete fire-resistant elements (e.g., a fire blanket) covering the acoustic panel 20. This in turn may reduce costs, manufacturing steps and/or space requirements of the acoustic panel 20 as compared to an acoustic panel which may be paired with an additional, discrete fire-resistant element such as a fire blanket. Encapsulating the thermal protection may also reduce maintenance compared to a fire blanket which may be susceptible to damage since it is laid over a component to be protected.

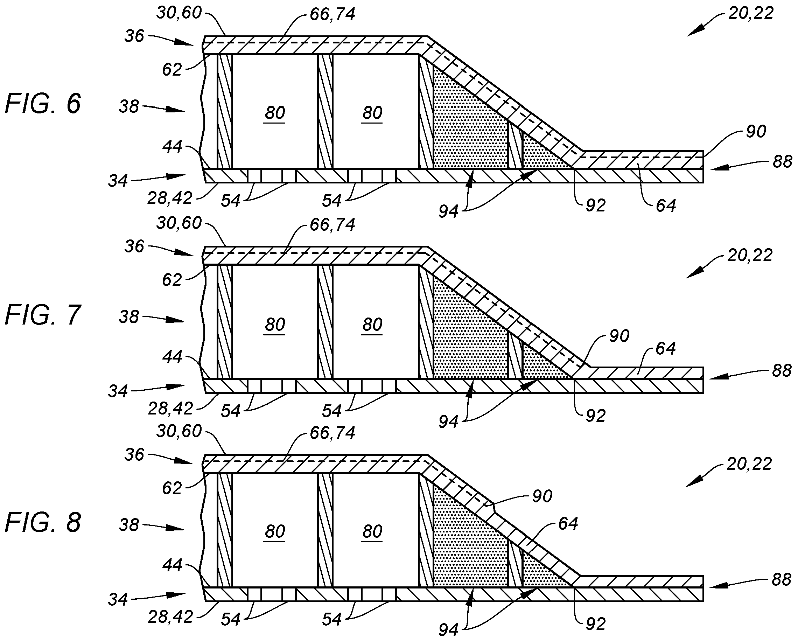

In some embodiments, referring to FIG. 6, the fire-resistant layer 66 may extend along an entirety of a lateral (e.g., axial and/or circumferential) width of the acoustic panel 20. The fire-resistant layer 66 of FIG. 6, for example, extends laterally (e.g., axially and/or circumferentially) to each respective edge 88 of the acoustic panel 20. In other embodiments, referring to FIGS. 7 and 8, the fire-resistant layer 66 may extend partially along the lateral width of the acoustic panel 20. Each edge 90 of the fire-resistant layer 66 of FIG. 7, for example, is laterally (e.g., axially and/or circumferentially) spaced from a respective acoustic panel edge 88.

In some embodiments, referring to FIGS. 6 and 7, the fire-resistant layer 66 may extend laterally (e.g., axially and/or circumferentially) along and thereby overlap and cover an entirety of the cellular core 38. The fire-resistant layer 66 of FIG. 6, for example, extends laterally (e.g., axially and/or circumferentially) beyond (or alternatively to in FIG. 7) each respective edge 92 of the cellular core 38. The fire-resistant layer 66 thereby laterally (e.g., axially and/or circumferentially) overlaps and covers each of the core cavities 80 (e.g., open volumes within the cellular core 38 as described above) as well as one or more plugged cavities 94 (e.g., cavities partially or completely filled by material such as the polymer matrix) in the cellular core 38. Note, a portion of the back skin 36 extending laterally along the plugged cavities 94 is subject to reduced pressure loads during aircraft propulsion system operation since pressurized air flowing within the flowpath 24 cannot directly contact the back skin 36 at its back skin interior side 62 through the plugged cavities 94. In other embodiments, referring to FIG. 8, the fire-resistant layer 66 may extend partially laterally along the cellular core 38. The fire-resistant layer 66 of FIG. 8, however, may still laterally (e.g., axially and/or circumferentially) overlap and cover each of the core cavities 80. Here, the fire-resistant layer 66 partially laterally overlaps each structural layer 64 (collectively labeled in FIGS. 6-9) while at least some or all of the structural layers 64 may each completely laterally overlap and project laterally beyond the fire-resistant layer 66.

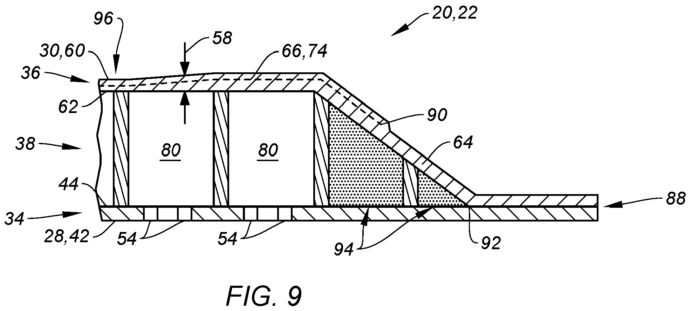

In some embodiments, referring to FIG. 9, the back skin thickness 58 may change as the back skin 36 extends laterally (e.g., axially and/or circumferentially) along the cellular core 38. The back skin thickness 58 of FIG. 9, for example, decreases as the back skin 36 extends laterally (e.g., axially and/or circumferentially) away from each edge 90 of the fire-resistant layer 66 into an intermediate region 96 of the back skin 36 and its fire-resistant layer 66. The back skin thickness 58, for example, may be tailored to account for structural reinforcement provided to the back skin 36 by inclusion of the fire-resistant layer 66.

In some embodiments, referring to FIGS. 6-9, a side portion of the cellular core 38 may taper to a point where the face skin 34 and the back skin 36 come together. Cavities in this tapered portion of the cellular core 38 may be the plugged cavities 94. However, it is contemplated at least some of the cavities in the tapered portion of the cellular core 38 may alternatively be the open core cavities 80.

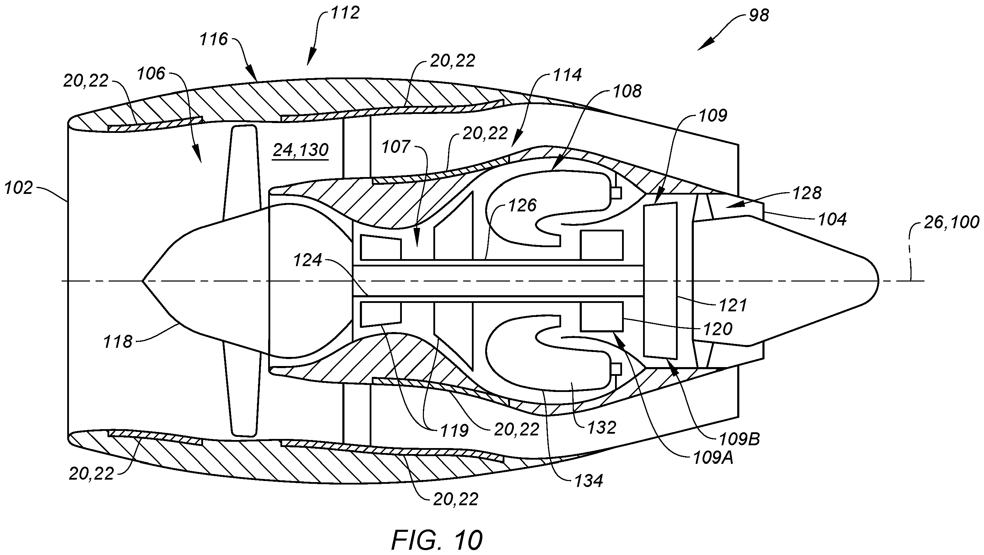

FIG. 10 illustrates an example of the aircraft propulsion system with which one or more of the acoustic panels 20 may be configured. This aircraft propulsion system includes a turbofan gas turbine engine 98. The gas turbine engine 98 of FIG. 10 extends axially along an axial centerline 100 (e.g., the axis 26) between an upstream airflow inlet 102 and a downstream combustion products exhaust 104. The gas turbine engine 98 includes a fan section 106, a compressor section 107, a combustor section 108 and a turbine section 109. The turbine section 109 includes a high pressure turbine (HPT) section 109A and a low pressure turbine (LPT) section 109B, which LPT section 109B may also be referred to as a power turbine (PT) section.

The engine sections 106-109B are arranged within the engine housing 112. This engine housing 112 includes an inner housing structure 114 and an outer housing structure 116. The inner housing structure 114 may house one or more of the engine sections 107-109B; e.g., a core of the gas turbine engine 98. The outer housing structure 116 may house at least the fan section 106. The inner and the outer housing structures 114 and 116 of FIG. 10 also form a bypass duct. The inner and/or the outer housing structure 116 may each include one or more of the acoustic panels 20.

Each of the engine sections 106, 107, 109A and 109B includes a respective bladed rotor 118-121. Each of these bladed rotors 118-121 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The fan rotor 118 is connected to and driven by the LPT rotor 121 through a low speed shaft 124. The compressor rotor 119 is connected to and driven by the HPT rotor 120 through a high speed shaft 126. The shafts 124 and 126 are rotatably supported by a plurality of bearings (not shown). Each of these bearings is connected to the engine housing 112 by at least one stationary structure.

During operation, air enters the gas turbine engine 98 through the airflow inlet 102. This air is directed through the fan section 106 and into a core flowpath 128 and a bypass flowpath 130 (e.g., the flowpath 24). The core flowpath 128 extends sequentially through the engine sections 107-109B. The air within the core flowpath 128 may be referred to as "core air". The bypass flowpath 130 extends through the bypass duct, which bypasses the engine core. The air within the bypass flowpath 130 may be referred to as "bypass air".

The core air is compressed by the compressor rotor 119 and directed into a combustion chamber 132 of a combustor 134 in the combustor section 108. Fuel is injected into the combustion chamber 132 and mixed with the compressed core air to provide a fuel-air mixture. This fuel air mixture is ignited and combustion products thereof flow through and sequentially cause the HPT rotor 120 and the LPT rotor 121 to rotate. The rotation of the HPT rotor 120 drives rotation of the compressor rotor 119 and, thus, compression of the air received from a core airflow inlet. The rotation of the LPT rotor 121 drives rotation of the fan rotor 118, which propels the bypass air through and out of the bypass flowpath 130. The propulsion of the bypass air may account for a majority of thrust generated by the gas turbine engine 98.

The acoustic panel 20 may be included in various gas turbine engines other than the one described above. The acoustic panel 20, for example, may be included in a geared gas turbine engine where a geartrain connects one or more shafts to one or more rotors in a fan section, a compressor section and/or any other engine section. Alternatively, the acoustic panel 20 may be included in a gas turbine engine configured without a geartrain; e.g., a direct drive gas turbine engine. The acoustic panel 20 may be included in a gas turbine engine configured with a single spool, with two spools (e.g., see FIG. 10), or with more than two spools. The gas turbine engine may be configured as a turbofan engine, a turbojet engine, a turboprop engine, a turboshaft engine, a propfan engine, a pusher fan engine or any other type of gas turbine engine. The gas turbine engine may alternatively be configured as an auxiliary power unit (APU). The present disclosure therefore is not limited to any particular types or configurations of gas turbine engines. Furthermore, while the acoustic panel 20 is described above with respect to various aircraft applications, the acoustic panel 20 of the present application may alternatively be used for non-aircraft applications.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An apparatus for an aircraft, comprising:
an acoustic panel (20) including a face skin (34), a back skin (36) and a cellular core (38) disposed between and connected to the face skin (34) and the back skin (36);
the back skin (36) laterally overlapping the face skin (34) and comprising an aerogel layer (66); and
the cellular core (38) comprising a plurality of cavities (80) that extend through the cellular core (38) from the face skin (34) to the back skin (36), and each of the plurality of cavities (80) fluidly coupled with one or more perforations (54) in the face skin (34).

2. The apparatus of claim 1, wherein the aerogel layer (66) laterally overlaps each of the plurality of cavities (80).

3. The apparatus of claim 1 or 2, wherein the back skin (36) further comprises a fiber-reinforced layer (64; 64A, 64B, 64C, 64D) bonded to and laterally overlapping the aerogel layer (66).

4. The apparatus of claim 3, wherein
the fiber-reinforced layer (64...64D) completely laterally overlaps the aerogel layer (66); and
the aerogel layer (66) partially laterally overlaps the fiber-reinforced layer (64...64D).

5. The apparatus of claim 3 or 4, wherein the fiber-reinforced layer (64...64D) is disposed between the cellular core (38) and the aerogel layer (66).

6. The apparatus of claim 5, wherein
the fiber-reinforced layer (64...64D) is a first fiber-reinforced layer (64A, 64B, 64C);
the back skin (36) further comprises a second fiber-reinforced layer (64D) bonded to and laterally overlapping the aerogel layer (66); and
the aerogel layer (66) is disposed between the first fiber-reinforced layer (64A...64C) and the second fiber-reinforced layer (64D).

7. The apparatus of claim 3 or 4, wherein the aerogel layer (66) is disposed between the fiber-reinforced layer (64... 64D) and the cellular core (38).

8. The apparatus of any of claims 3 to 7, wherein the fiber-reinforced layer (64...64D) comprises fiber reinforcement (72) embedded within a polymer matrix (70).

9. The apparatus of claim 8, wherein the fiber reinforcement (72) comprises fiberglass.

10. The apparatus of claim 8 or 9, wherein the fiber reinforcement (72) comprises carbon fiber.

11. The apparatus of any preceding claim, wherein a thickness (58) of the back skin (36) decreases as the back skin (36) extends away from an edge (90) of the aerogel layer (66) into an intermediate region (96) of the aerogel layer (66).

12. The apparatus of any preceding claim, wherein the face skin (34) comprises fiber reinforcement (52) embedded within a polymer matrix (50).

13. The apparatus of any preceding claim, wherein the cellular core (38) comprises metal.

14. The apparatus of any preceding claim, wherein the cellular core (38) comprises a honeycomb core.

15. The apparatus of any preceding claim, wherein
the acoustic panel (20) extends axially along and circumferentially about an axis (26); and
the back skin (36) is disposed radially outboard of the face skin (34).
